# EUROPEAN PATENT SPECIFICATION

(11) **EP 2 058 794 B1**
(45) Date of publication and mention of the grant of the patent: **10.04.2013**
(21) Application number: 08168045.6
(22) Date of filing: 31.10.2008
(51) Int. Cl.: G09G 5/00

(54) **Video processing apparatus and control method thereof**
Videoverarbeitungsvorrichtung und Steuerverfahren dafür
Appareil de traitement vidéo et son procédé de commande

(30) Priority: 08.11.2007 KR 20070113832
(43) Date of publication of application: 13.05.2009
(73) Proprietor: Samsung Electronics Co., Ltd., Suwon-si, Gyeonggi-do, 443-742 (KR)
(72) Inventor: Cho, Jae-seung, Suwon-si Gyeonggi-do (KR)
(74) Representative: Fearnside, Andrew Simon

(56) References cited:
- WO-A-2007/101236
- US-A1- 2006 001 776
- US-A1- 2006 071 921
- US-A1- 2006 280 439

## Description

### BACKGROUND OF THE INVENTION

### 1. Field of the Invention

The present general inventive concept relates to video processing apparatus, for example which receives a video signal from a plurality of video signal sources connected thereto, and control methods thereof.

### 2. Description of the Related Art

In general, a video processing apparatus, such as a television, a monitor, etc., may receive a video signal from a video signal source, such as a DVD player, a computer, a set top box, etc. The video processing apparatus and the video signal source communicate the video signal through an interface, such as HDMI (High Definition Multimedia Interface), DVI (Digital Video Interface), etc.

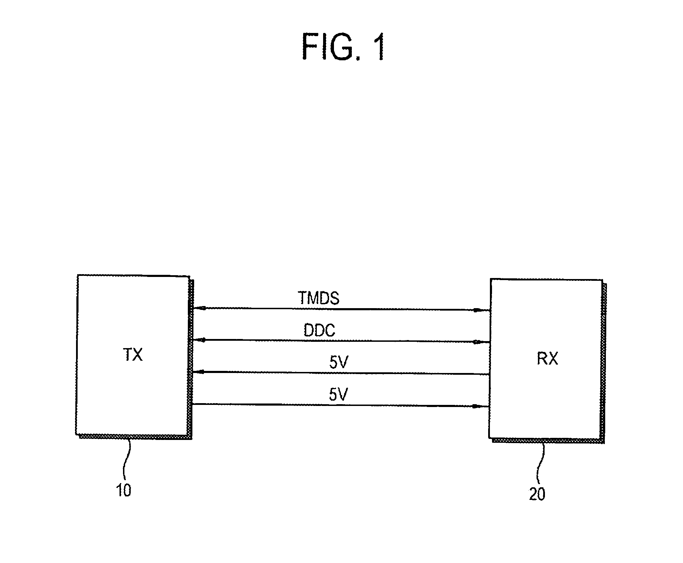

HDMI and DVI employ a digital video signal transmission protocol which is called TMDS (Transition Minimized Differential Signaling). As illustrated in FIG. 1, in order to realize the HDMI protocol, a video signal converting module which includes a TMDS transmitter 10 and a TMDS receiver 20. The transmitter 10 is installed to the video signal source, and the receiver 20 is installed to the video processing apparatus, so as to transmit a digital video signal to the video processing apparatus from the video signal source.

In such HDMI video signal transmission, the transmitter 10 applies a voltage of 5V to the receiver 20 and determines whether or not the receiver 20 outputs an HPD (Hot Plug Detect) control signal, to thereby determine whether or not the video processing apparatus and the video signal source are connected each other. If the HPD control signal of 5V is outputted, the transmitter 10 determines that the video processing apparatus and the video signal source are normally connected each other and starts DDC (Display Data Channel) communication. Then, the transmitter 10 receives information, such as resolution of the video processing apparatus to which the receiver 20 is installed, and transmits video data to the receiver 20 through the TMDS line.

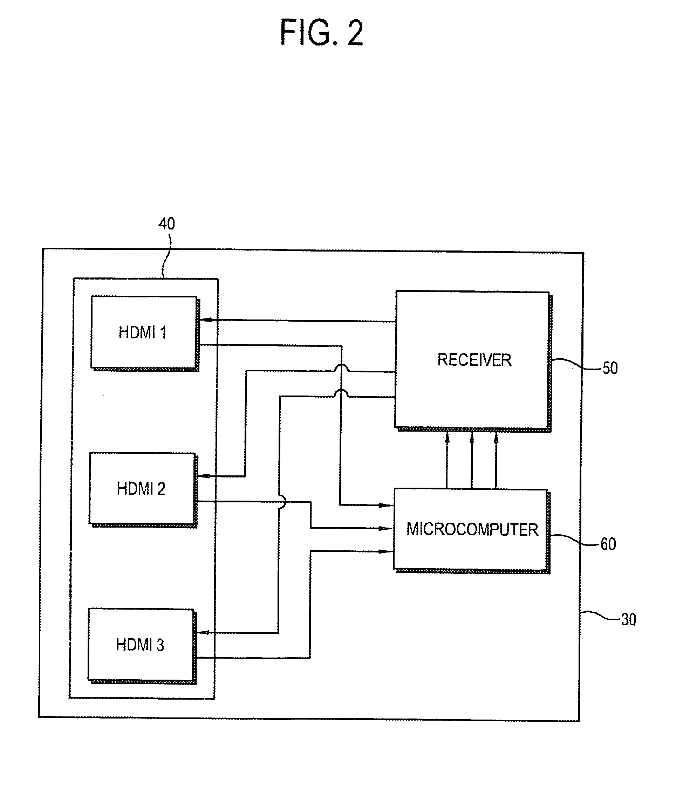

On the other hand, referring to FIG. 2, a conventional video processing apparatus 30 may be provided with a plurality of connectors 40 for connection with a plurality of video signal sources. A microcomputer 60 is connected with the plurality of connectors 40 and determines whether or not a jack of each video signal source is connected with each connector 40. If the jack is connected with the connector 40, the microcomputer 60 outputs an HPD control signal to transmit a video signal from the video signal source to the receiver 50.

However, in such a conventional video processing apparatus which includes the plurality of connectors, there is a problem that the transmission of the video signal is inefficiently controlled. That is, the microcomputer 60 has a limited number of GPIOs (General Purpose Input/Outputs) for outputting the HPD control signal, for example, three GPIOs corresponding to three connectors of the video processing apparatus. However, if the number of the connectors increases, the GPIOs become insufficient and should increase in size thereof.

WO 2007/101236 discloses a source switching method for a multimedia interface. Document US 2006/0280439 discloses an environment-responsive digital device control apparatus and method. Document US 2006/001776 discloses a television receiver.

### SUMMARY OF THE INVENTION

The present invention desirably provides a video processing apparatus which may efficiently control transmission of a video signal with a limited number of GPIOs, and a control method thereof.

Additional aspects and utilities of the present general inventive concept will be set forth in part in the description which follows.

In one of its aspects the invention provides a video processing apparatus, according to claim 1 herein.

When the connector connected to the video signal source is not connected to the decoding part by the switching part, the controller may inform a user that the connector connected to the video signal source is not connected to the decoding part.

The video processing apparatus may further include a user input part through which a user's command is inputted, and the controller may control the switching part to connect any one of the plurality of connectors to the decoding part according to the user's command.

The video processing apparatus may further include a signal inverting part which outputs an inverted control signal inverted from the control signal outputted from the controller wherein the controller is arranged to output a high signal or a low signal in which the high signal has a higher value than the low signal.

The control signal may include an HPD control signal.

The video signal source and the connectors may be connected to each other through one of HDMI and DVI.

The each connector may include a TMDS line, a DDC line, and an HPD line.

In another of its aspects, the invention provides a control method of a video processing apparatus according to claim 8 herein.

The control method may further include informing a user that the connector connected to the video signal source is not connected to the decoding part when the connector connected to the video signal source is not connected to the decoding part.

The control method may further include controlling the switching part to connect any one of the plurality of connectors to the decoding part according to a user's command.

The control method may further include outputting an inverted control signal inverted from the control signal wherein the control signal is a high signal or a low signal in which the high signal has a higher value than the low signal.

The control signal may include an HPD control signal.

The video signal source and the connectors may be connected to each other through one of HDMI and DVI.

In yet another of its aspects, the invention provides a video processing apparatus, including a plurality of connectors to connect to a plurality of video signal sources, a user input part to allow a user to select one of the plurality of video sources, a decoder to decode a video signal provided by a video signal source through a respective connector, a switching part to selectively connect a connector to the decoding part; and a controller to control transmission of a video signal from the selected video source to the decoder according to a connection status of the corresponding connector.

The controller may output a control signal to transmit the video signal from the selected video source to the decoder when the connector selectively connected to the decoder corresponds to the selected video source.

The controller may inform the user that the video source is not connected to the decoder when the connector selectively connected to the decoder does not correspond to the selected video source.

Each of the plurality of connectors may include one control signal receiving unit, and the controller may include a single control signal transmission unit to transmit the control signal to the plurality of connectors.

In a further aspect, the invention provides a method of controlling a video processing apparatus, the method including selecting a video source, selectively connecting a connector connected to one of a plurality of video sources to a decoder, determining whether a connector connected to a video source corresponding to the selected video source is connected to the decoder, and outputting a control signal to transmit a video signal from one of the plurality of video sources to the decoder according to a connected status of the connector, wherein the control signal is output when the connector selectively connected to the decoder corresponds to the selected video source.

The video control apparatus may include a controller to generate the control signal, and each of the plurality of connectors may include one control signal receiving unit, and the controller may include a single control signal transmission unit to transmit the control signal to the plurality of connectors.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram schematically illustrating an HDMI interface;
FIG. 2 is a block diagram illustrating a conventional video processing apparatus;
FIG. 3 is a block diagram illustrating a video processing apparatus according to an exemplary embodiment of the present general inventive concept;
FIG. 4 is a block diagram specifically illustrating the video processing apparatus in FIG. 3;
FIG. 5 is a block diagram illustrating a video processing apparatus according to another exemplary embodiment of the present general inventive concept; and
FIG. 6 is a flowchart illustrating a control method of a video processing apparatus according to an exemplary embodiment of the present general inventive concept.

Reference will now be made in detail to the embodiments of the present general inventive concept, examples of which are illustrated in the accompanying drawings, wherein like reference numerals refer to like elements throughout.

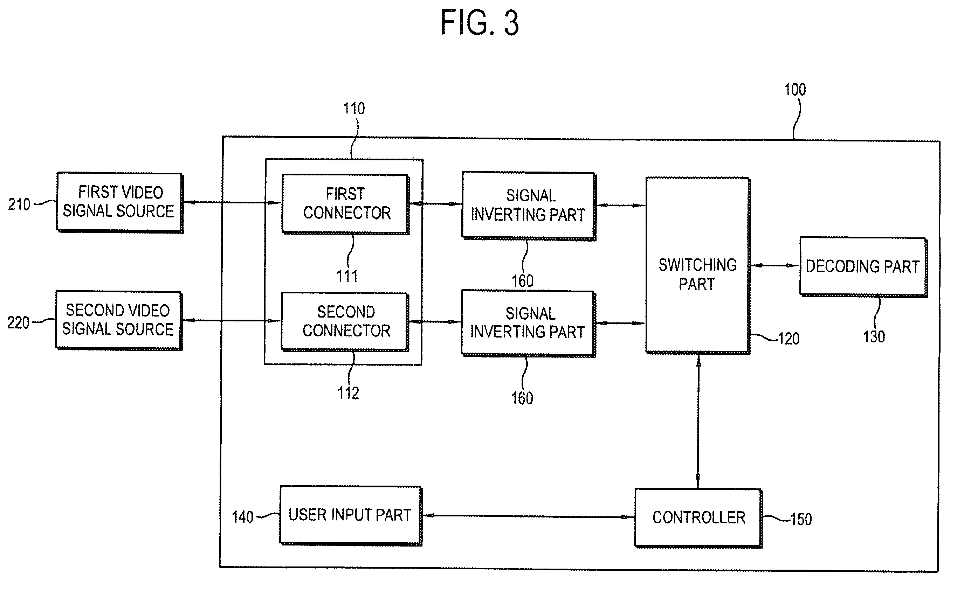

Referring to FIG. 3, a video processing apparatus 100 according to an exemplary embodiment of the present general inventive concept includes a plurality of connectors to connect to a video signal source, and to receive a video signal from the video signal source through the connectors. Here, the video processing apparatus may be provided as a television, a monitor, etc., and may receive the video signal from a video signal source, such as a DVD player, a computer, a set top box, etc., through an interface, such as HDMI or DVI.

As illustrated in FIG. 3, the video processing apparatus 100 may include a plurality of connectors 110, a switching part 120, a decoding part 130, a user input part 140, a controller 150, and a signal inverting part 160.

The video signal source may be connected to the plurality of connectors 110. The plurality of connectors 110 may include a first connector 111 and a second connector 112.

The video signal source may include a first video signal source 210 and a second video signal source 220. The first video signal source 210 may be connected to the first connector 111; and the second video signal source 220 may be connected to the second connector 112.

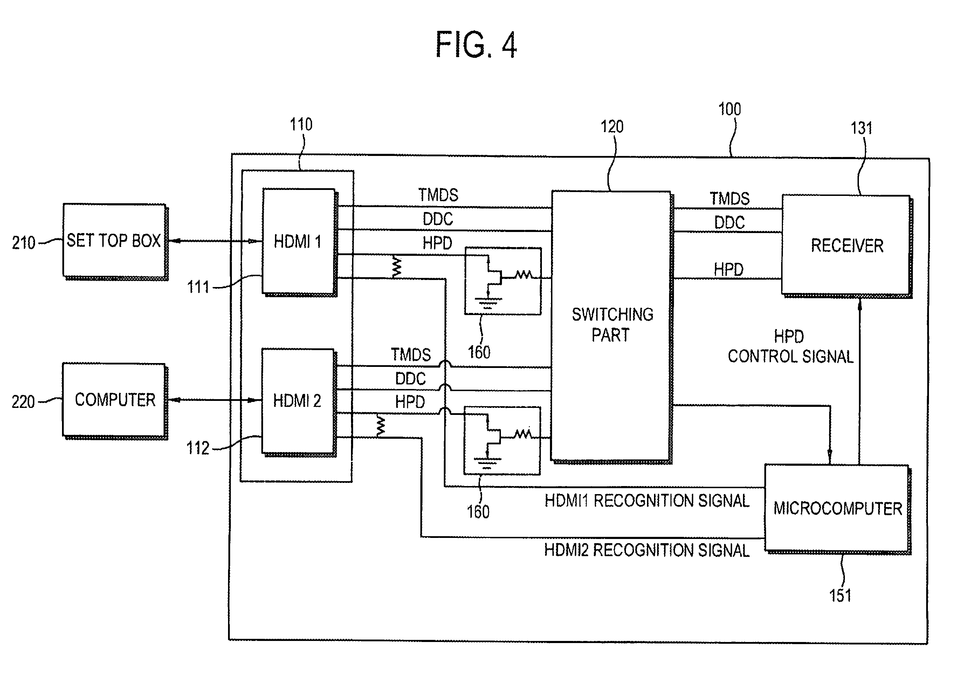

The video signal sources 210 and 220 may be connected to the connectors 111 and 112 through an interface such as HDMI, DVI, etc. The respective connectors 111 and 112 may include a TMDS line, a DDC line and an HPD line. As illustrated in FIG. 4, the connectors 110 may be realized into the HDMI connector 110 or a DVI connector (not illustrated), and the video signal sources 210 and 220 may be realized into a set top box, a computer, etc.

The HDMI connector 110 includes the TMDS line, the DDC line and the HPD line. The TMDS line and the DDC line are connected to a receiver 131 through a switching part 120. The HPD line includes a recognition signal transmission line and an HPD control signal transmission line. The recognition signal transmission line is connected to a microcomputer 151 from the HDMI connector 110 and transmits a recognition signal on whether or not the video signal sources 210 and 220 are connected to the HDMI connector 110. The HPD control signal transmission line is connected to the microcomputer 151 from the HDMI connector 110 through the switching part 120 and transmits an HPD control signal outputted from the microcomputer 151 to the HDMI connector 110.

The switching part 120 selectively connects any one of the plurality of connectors 110 to the decoding part 130. The switching part 120 determines which connector 110 is connected to the decoding part 130 and provides the information to the controller 150. Further, the switching part 120 may select any one of the plurality of connectors 110 under the control of the controller 150 and connect the selected connector to the decoding part 130.

As illustrated in FIG. 4, the TMDS line, the DDC line and the HPD line are connected to the receiver 131 from any one of the plurality of connectors 110 by the switching part 120. The reason why only one of the plurality of connectors 110 is used to connect is because the video processing apparatus 100 processes one video signal to display an image. For example, if a plurality of video signals are inputted into the respective connectors, a user wants to selectively view one of them, and thus, the switching part 120 selects one of the plurality of connectors 110 under the control of the microcomputer 151 according to the user's selection and connects the selected connector to the receiver 131.

The decoding part 130 decodes a video signal transmitted from the video signal source 210 or 220. The decoding part 130 may include the switching part 120, or alternatively, may be included in a video signal processing part (not illustrated). As illustrated in FIG. 4, the decoding part 130 may be realized into the receiver 131 of the HDMI type. The receiver 131 decodes the video signal coded in the HDMI method. The receiver 131 may provide information on the video processing apparatus 100 to the video signal source 210 or 220 through the DDC line. Also, the receiver 131 may transmit the HPD control signal outputted from the microcomputer 151 through the HPD line.

The user input part 140 receives a command from a user. For example, the user input part 140 may include an HDMI channel selection key provided in a remote controller or a television and transmits a command from a user to the controller 150.

If one of the plurality of connectors 110 connected to the video signal source 210 or 220 is connected to the decoding part 130 by the switching part 120, the controller 150 outputs a control signal to transmit a video signal from the video signal source 210 or 220 to the decoding part 130. Here, the control signal may include an HPD control signal. The controller 150 may control the switching part 120 to connect any one of the plurality of connectors 110 according to the user's command.

Further, if the connector 110 which is connected to the video signal source 210 or 220 is not connected to the decoding part 130 by the switching part 120, the controller 150 may inform a user of the fact. For example, if the second connector 112 is connected to the decoding part 130 by the switching part 120 in the state that only the first connector 111 is connected to the video signal source, the controller 150 may inform a user that the video signal source is not connected to the second connector 112 through a display (not illustrated).

For example, if a user selects the second connector 112 to view an image provided from the second video signal source 220 in the state that the first video signal source 210 is connected to the first connector 111 and the second video signal source 220 is connected to the second connector 112, the switching part 120 connects the second connector 112 to the decoding part 130, and then, the controller 150 determines whether or not the switching part 120 has connected the second connector 112 to the decoding part 130 and outputs an HPD control signal. Then, the second video signal source 220 starts to transmit a video signal in response to the HPD control signal.

As illustrated in FIG. 4, the controller 150 may be provided as the microcomputer 151, and the microcomputer 151 may include a plurality of GPIOs. The GPIOs are provided to be used for a processor, a controller, etc. for various purposes. Two of the plurality of GPIOs function as recognition signal transmission lines each corresponding to two HDMI connectors, and one of them functions as the HPD line.

As illustrated in FIG. 2, the microcomputer 60 of the conventional video processing apparatus 30 includes the same number of GPIOs to output the HPD control signal as the number of the connectors. To the contrary, the microcomputer 151 of the video processing apparatus 100 according to the present embodiment includes one GPIO for outputting the HPD control signal irrespective of the number of the connectors, thereby more efficiently using the microcomputer 151. Here, the number of the GPIOs for transmission of the HDMI recognition signal may be the same as the number of the connectors.

As illustrated in FIG. 4, if the video signal sources 210 and 220 are connected to the connectors 110, each connector 110 outputs a voltage of 5V, that is, a high signal to the microcomputer 151 through the recognition transmission line. If not, a voltage of 0V, that is, a low signal is maintained. The high signal is outputted from each of the video signal sources 210 and 220 and transmitted to the microcomputer 151 through the connector 110. That is, the recognition signal includes the high signal and the low signal. The microcomputer 151 receives the recognition signal and determines whether or not the video signal sources 210 and 220 are connected to the connectors 110.

Then, the microcomputer 151 receives information on which connector is switched from the switching part 120 and determines whether or not at least one connector 110 connected to the video signal sources 210 and 220 is connected to the receiver 131 by the switching part 120. That is, the microcomputer 151 transmits the HPD control signal to only the connector connected to the receiver 131 by the switching part 120 among the connectors connected to the video signal sources 210 and 220. This is because if the connectors connected to the video signal sources 210 and 220 are not connected to the receiver 131, the video signal cannot be transmitted to the receiver 131 even if the video signal source concerned starts to transmit the video signal by transmitting the HPD control signal.

As described above, the video processing apparatus 100 according to the present embodiment can more efficiently transmit the HPD control signal to only the connector selected by a user, compared with the conventional video processing apparatus 30 in which the HPD control signal is transmitted to all the connectors to which the video signal sources are connected.

The signal inverting part 160 outputs an inverted control signal inverted from the control signal outputted from the controller 150. The signal inverting part 160 inverts a high HPD control signal outputted from the controller 150 into a low signal, and inverts a low HPD control signal into a high signal. Here, the controller 150 outputs a low signal as an HPD control signal to allow transmission of the video signal, and outputs a high signal as an HPD control signal to prohibit transmission of the video signal. For example, if the first video signal source 210 is connected to the first connector 110 and the first connector 110 is connected to the decoding part 130 by the switching part 120, the controller 150 outputs a low signal; and if not, the controller 150 outputs a high signal. In this case, a voltage of 0V or a low voltage is applied, thereby decreasing possibility of errors and increasing stability of control.

As illustrated in FIG. 4, the signal inverting part 160 may be provided as a transistor between each connector 110 and the switching part 120. Alternatively, the signal inverting part 160 may be provided at an output side of the microcomputer 151.

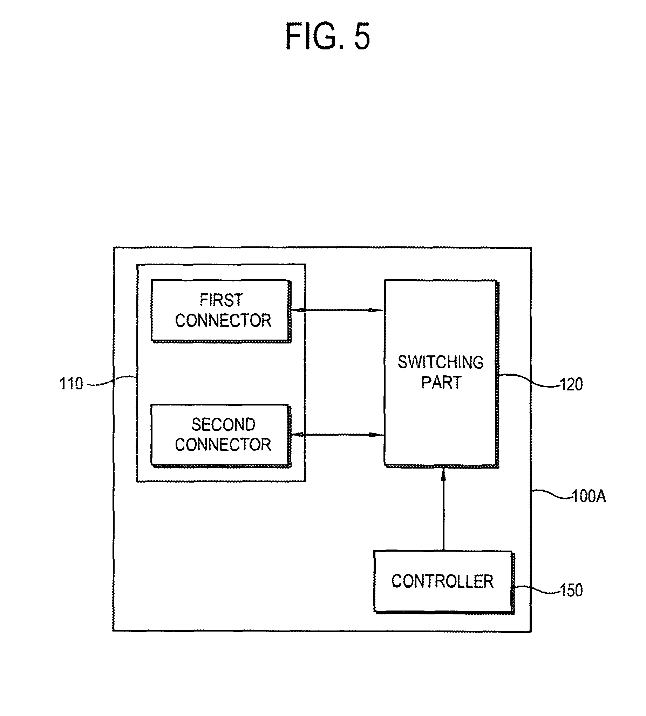

As illustrated in FIG. 5, a video processing apparatus 100A according to another exemplary embodiment of the present general inventive concept may include the plurality of connectors 110, the switching part 120, and the controller 150. These elements are similar as those of the video processing apparatus 100 in FIG. 3, and thus, detailed description thereof will be omitted.

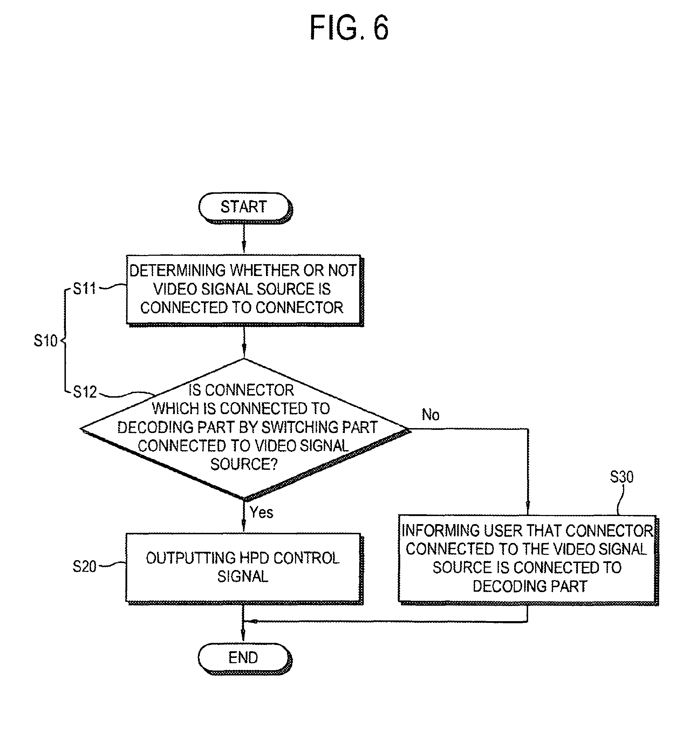

Hereinafter, a control method of a video processing apparatus according to an exemplary embodiment of the present general inventive concept will be described with reference to FIGS. 3 through 6.

First, the video processing apparatus 100 determines whether or not the connector connected to the video signal source 210 or 220 is connected to the decoding part 130 by the switching part 120 in operation S10.

If the connector connected to the video signal source 210 or 220 is connected to the decoding part 130, the video processing apparatus 100 outputs a control signal to transmit a video signal from the video signal source 210 or 220 to the decoding part 130 in operation S20.

In more detail, operation 10 may include operation S11 and operation S12.

First, the video processing apparatus 100 determines whether or not the video signal sources 210 and 220 are connected to the connectors 110 in operation S11. As illustrated in FIG. 4, if the video signal sources 210 and 220 are connected to the connectors 110, each connector 110 outputs a high signal of 5V to the microcomputer 151 through the recognition transmission line. To the contrary, if not, a low signal of 0V is maintained.

Then, the video processing apparatus 100 determines whether or not the connector connected to the decoding part 130 by the switching part 120 is connected to the video signal source in operation S12. For example, if a user selects the second connector 112 to view an image provided from the second video signal source 220 in the state that the first video signal source 210 is connected to the first connector 111 and the second video signal source 220 is connected to the second connector 112, the switching part 120 connects the second connector 112 to the decoding part 130, and then, the controller 150 determines whether or not the switching part 120 has connected the second connector 112 to the decoding part 130.

On the other hand, the video processing apparatus 100 may first determine the connector connected to the decoding part 130 by the switching part 120 among the plurality of connectors, and then, may determine whether or not the connector concerned is connected to the video signal source.

If the connector connected to the video signal source 210 or 220 is connected to the decoding part 130 by the switching part 120 at operation S12, the video processing apparatus 100 outputs an HPD control signal in operation S20. As illustrated in FIG. 4, the controller 150 may be realized as the microcomputer 151, and the microcomputer 151 may include the plurality of GPIOs. Two of the GPIOs are the recognition signal transmission lines each corresponding to two HDMI connectors, and one of them is the HPD line.

If the connector connected to the video signal source 210 or 220 is not connected to the decoding part 130 by the switching part 120 at operation S12, the video processing apparatus 100 informs a user of the fact in operation S30. For example, if the second connector 112 is connected to the decoding part 130 by the switching part 120 in the state that only the first connector 111 is connected to the video signal source, the controller 150 may inform that the second connector 112 is not connected to the video signal source of the user through a display (not illustrated).

As described above, according to the present general inventive concept, it is possible efficiently control transmission of a video signal with a limited number of GPIOs, thereby simplifying a circuit thereof and decreasing manufacturing cost.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video processing apparatus (100), comprising:
a plurality of connectors (110), each including a Hot Plug Detect HPD line, to connect to a plurality of video signal sources (210, 220);
a decoding part (130) which decodes a video signal provided from one of the plurality of video signal sources;
a switching part (120) which selectively connects any one of the plurality of connectors to the decoding part; and
a controller (150) arranged to determine whether one of the plurality of-connectors (110) connected to a video signal source is connected to the decoding part (130) by the switching part (120) and wherein the controller is arranged to receive information from the switching part to determine which of the plurality of connectors (110) is connected to the a decoding part (130) by the switching part (120), **characterised in that**:
the controller (150) is arranged to transmit a control signal via the switching part to the connector connected to said video signal source and **in that** the control signal comprises a hot plug detect HPD control signal and the controller (150) is arranged to outputs the control signal to said one of the plurality of connectors (110) to transmit the video signal from said video signal source to the decoding part when it is determined that the connector connected to said video signal source is connected to the decoding part (130) by the switching part (120).

2. The video processing apparatus according to claim 1, wherein when the connector connected to the video signal source is not connected to the decoding part by the switching part, the controller informs a user that the connector connected to the video signal source is not connected to the decoding part.

3. The video processing apparatus according to claim 1 or 2, further comprising:
a user input part (140) through which a user's command is inputted, wherein the controller controls the switching part to connect any one of the plurality of connectors to the decoding part according to the user's command.

4. The video processing apparatus as claimed in any of claims 1 to 3, further comprising: a signal inverting part (160) which outputs an inverted control signal inverted from the control signal outputted from the controller wherein the controller is arranged to output a high signal or a low signal in which the high signal has a higher value than the low signal.

5. The video processing apparatus as claimed in any of claims 1 to 4, wherein the video signal source and the connectors are connected to each other through one of HDMI and DVI.

6. The video processing apparatus as claimed in any of claims 1 to 5, wherein each connector comprises a TMDS line, a DDC line, and an HPD line.

7. The video processing apparatus as claimed in any of claims 1 to 6, wherein each of the plurality of connectors comprises one control signal receiving unit, and the controller comprises a single control signal transmission unit to transmit the control signal to the plurality of connectors.

8. A method of controlling a video processing apparatus having a plurality of connectors (110), each including a Hot Plug Detect HPD line, to connect to a plurality of video signal sources, a decoding part (130) which decodes a video signal provided from the plurality of video signal sources, and a switching part (120) which selectively connects any one of the plurality of connectors to the decoding part, the method comprising:
determining whether one of the plurality of connectors (110) connected to a_video signal source is connected to the decoding part (130) by the switching part (120):
receiving information from the switching part to determine which of the plurality of connectors (110) is connected to the a decoding part (130) by the switching part (120);
outputting a control signal (S20) to said one of the plurality of connectors (110) to transmit the video signal from said video signal source, **characterised by**:
transmitting the control signal via the switching part to the connector connected to said video signal source, the control signal comprising a hot plug detect HPD control signal; and, outputting the control signal to said one of the plurality of connectors (110) to transmit the video signal from said video signal source to the decoding part when it is determined that the connector connected to said video signal source is connected to the decoding part (130) by the switching part (120).

9. The control method according to claim 8, further comprising:
informing a user (S30) that the connector connected to the video signal source is not connected to the decoding part when the connector connected to the video signal source is not connected to the decoding part.

10. The control method according to claim 8 or 9, further comprising:
controlling the switching part to connect any one of the plurality of connectors to the decoding part according to a user's command.

11. The control method as claimed in any of claims 8 to 10, further comprising:
outputting an inverted control signal inverted from the control signal wherein the controller signal is a high signal or a low signal in which the high signal has a higher value than the low signal.

12. The control method as claimed in any of claims 8 to 11, wherein the video signal source and the connectors are connected to each other through one of HDMI and DVI.

13. The method of as claimed in any of claims 8 to 12, wherein the video control apparatus comprises a controller to generate the control signal, and each of the plurality of connectors comprises one control signal receiving unit, and the controller comprises a single control signal transmission unit to transmit the control signal to the plurality of connectors.

## Patentansprüche

1. Videoverarbeitungsvorrichtung (100), die Folgendes aufweist:
mehrere Verbinder (110), wobei jeder eine Hot-Plug-Detektier-HPD-Leitung aufweist, zum Verbinden mit mehreren Videosignalquellen (210, 220);
einen Decodierteil (130), der ein Videosignal decodiert, das von einer der mehreren Videosignalquellen bereitgestellt ist;
ein Schaltteil (120), das jedweden der mehreren Verbinder selektiv mit dem Decodierteil verbindet; und
eine Steuerung (150), die ausgelegt ist, zu ermitteln, ob einer der mehreren Verbinder (110), die mit einer Videosignalquelle verbunden sind, durch das Schaltteil (120) mit dem Decodierteil (130) verbunden ist, und wobei die Steuerung ausgelegt ist, Informationen vom Schaltteil zu empfangen, um zu ermitteln, welcher der mehreren Verbinder (110) durch das Schaltteil (120) mit dem Decodierteil (130) verbunden ist, **dadurch gekennzeichnet, dass**:
die Steuerung (150) ausgelegt ist, ein Steuersignal über das Schaltteil zum Verbinder zu senden, der mit der Videosignalquelle verbunden ist, und dadurch, dass das Steuersignal ein Hot-Plug-Detektier-HPD-Steuersignal aufweist und die Steuerung (150) ausgelegt ist, das Steuersignal an den einen der mehreren Verbinder (110) auszugeben, um das Videosignal von der Videosignalquelle zum Decodierteil zu senden, wenn ermittelt wird, dass der Verbinder, der mit der Videosignalquelle verbunden ist, durch das Schaltteil (120) mit dem Decodierteil (130) verbunden ist.

2. Videoverarbeitungsvorrichtung nach Anspruch 1, wobei, wenn der Verbinder, der mit der Videosignalquelle verbunden ist, nicht durch das Schaltteil mit dem Decodierteil verbunden ist, die Steuerung einen Benutzer informiert, dass der Verbinder, der mit der Videosignalquelle verbunden ist, nicht mit dem Decodierteil verbunden ist.

3. Videoverarbeitungsvorrichtung nach Anspruch 1 oder 2, die ferner Folgendes aufweist: ein Benutzereingabeteil (140), durch das ein Benutzerbefehl eingegeben wird, wobei die Steuerung das Schaltteil steuert, um jedweden der mehreren Verbinder gemäß dem Benutzerbefehl mit dem Decodierteil zu verbinden.

4. Videoverarbeitungsvorrichtung nach einem der Ansprüche 1 bis 3, die ferner Folgendes aufweist:
ein Signalinvertierteil (160), das ein invertiertes Steuersignal ausgibt, das aus dem Steuersignal invertiert ist, das von der Steuerung ausgegeben ist, wobei die Steuerung ausgelegt ist, ein High-Signal oder ein Low-Signal auszugeben, wobei das High-Signal einen höheren Wert als das Low-Signal aufweist.

5. Videoverarbeitungsvorrichtung nach einem der Ansprüche 1 bis 4, wobei die Videosignalquelle und die Verbinder miteinander durch HDMI oder DVI verbunden sind.

6. Videoverarbeitungsvorrichtung nach einem der Ansprüche 1 bis 5, wobei jeder Verbinder eine TMDS-Leitung, eine DDC-Leitung und eine HPD-Leitung aufweist.

7. Videoverarbeitungsvorrichtung nach einem der Ansprüche 1 bis 6, wobei jeder der mehreren Verbinder eine Steuersignalempfangseinheit aufweist und die Steuerung eine einzelne Steuersignalsendeeinheit aufweist, um das Steuersignal zu den mehreren Verbindern zu senden.

8. Verfahren des Steuerns einer Videoverarbeitungsvorrichtung, die mehrere Verbinder (110), wobei jeder eine Hot-Plug-Detektier-HPD-Leitung aufweist, zum Verbinden mit mehreren Videosignalquellen; ein Decodierteil (130), das ein Videosignal decodiert, das von den mehreren Videosignalquellen bereitgestellt ist; und ein Schaltteil (120) aufweist, das jedweden der mehreren Verbinder selektiv mit dem Decodierteil verbindet; wobei das Verfahren Folgendes aufweist:
Ermitteln, ob einer der mehreren Verbinder (110), die mit einer Videosignalquelle verbunden sind, durch das Schaltteil (120) mit dem Decodierteil (130) verbunden ist;
Empfangen von Informationen vom Schaltteil, um zu ermitteln, welcher der mehreren Verbinder (110) durch das Schaltteil (120) mit dem Decodierteil (130) verbunden ist;
Ausgeben eines Steuersignals (S20) an den einen der mehreren Verbinder (110), um das Videosignal von der Videosignalquelle zu senden, **gekennzeichnet durch**:
Senden des Steuersignals über das Schaltteil zum Verbinder, der mit der Videosignalquelle verbunden ist, wobei das Steuersignal ein Hot-Plug-Detektier-HPD-Steuersignal aufweist; und Ausgeben des Steuersignals an den einen der mehreren Verbinder (110), um das Videosignal von der Videosignalquelle zum Decodierteil zu senden, wenn ermittelt wird, dass der Verbinder, der mit der Videosignalquelle verbunden ist, **durch** das Schaltteil (120) mit dem Decodierteil (130) verbunden ist.

9. Steuerverfahren nach Anspruch 8, das ferner Folgendes aufweist: Informieren eines Benutzers (S30), dass der Verbinder, der mit der Videosignalquelle verbunden ist, nicht mit dem Decodierteil verbunden ist, wenn der Verbinder, der mit der Videosignalquelle verbunden ist, nicht mit dem Decodierteil verbunden ist.

10. Steuerverfahren nach Anspruch 8 oder 9, das ferner Folgendes aufweist: Steuern des Schaltteils, um jedweden der mehreren Verbinder gemäß einem Benutzerbefehl mit dem Decodierteil zu verbinden.

11. Steuerverfahren nach einem der Ansprüche 8 bis 10, das ferner Folgendes aufweist: Ausgeben eines invertierten Steuersignals, das aus dem Steuersignal invertiert ist, wobei das Steuerungssignal ein High-Signal oder ein Low-Signal ist, wobei das High-Signal einen höheren Wert als das Low-Signal aufweist.

12. Steuerverfahren nach einem der Ansprüche 8 bis 11, wobei die Videosignalquelle und die Verbinder miteinander durch HDMI oder DVI verbunden sind.

13. Verfahren nach einem der Ansprüche 8 bis 12, wobei die Videosteuervorrichtung eine Steuerung aufweist, um das Steuersignal zu erzeugen, und jeder der mehreren Verbinder eine Steuersignalempfangseinheit aufweist und die Steuerung eine einzelne Steuersignalsendeeinheit aufweist, um das Steuersignal zu den mehreren Verbindern zu senden.

## Revendications

1. Appareil de traitement vidéo (100), comprenant :
une pluralité de connecteurs (110), comprenant chacun une ligne de Détection de Branchement à Chaud HPD pour se connecter à une pluralité de sources de signaux vidéo (210, 220) ;
une partie de décodage (130) qui décode un signal vidéo fourni par l'une de la pluralité de sources de signaux vidéo ;
une partie de commutation (120) qui connecte sélectivement l'un quelconque de la pluralité de connecteurs à la partie de décodage ; et
une unité de commande (150) conçue pour déterminer si l'un de la pluralité de connecteurs (110) connectés à une source de signal vidéo est connecté à la partie de décodage (130) par la partie de commutation (120) et
dans lequel l'unité de commande est conçue pour recevoir des informations en provenance de la partie de commutation pour déterminer lequel de la pluralité de connecteurs (110) est connecté à la partie de décodage (130) par la partie de commutation (120), **caractérisé en ce que** :
l'unité de commande (150) est conçue pour transmettre un signal de commande par l'intermédiaire de la partie de commutation au connecteur connecté à ladite source de signal vidéo et **en ce que** le signal de commande comprend un signal de commande de détection de branchement à chaud HPD et l'unité de commande (150) est conçue pour délivrer en sortie le signal de commande audit un de la pluralité de connecteurs (110) pour transmettre le signal vidéo de ladite source de signal vidéo à la partie de décodage lorsqu'il est déterminé que le connecteur connecté à ladite source de signal vidéo est connecté à la partie de décodage (130) par la partie de commutation (120).

2. Appareil de traitement vidéo selon la revendication 1, dans lequel, lorsque le connecteur connecté à la source de signal vidéo n'est pas connecté à la partie de décodage par la partie de commutation, l'unité de commande informe un utilisateur du fait que le connecteur connecté à la source de signal vidéo n'est pas connecté à la partie de décodage.

3. Appareil de traitement vidéo selon la revendication 1 ou 2, comprenant en outre :
une partie d'entrée d'utilisateur (140) par l'intermédiaire de laquelle la commande d'un utilisateur est fournie en entrée, dans lequel l'unité de commande commande la partie de commutation pour connecter l'un quelconque de la pluralité de connecteurs à la partie de décodage conformément à la commande de l'utilisateur.

4. Appareil de traitement vidéo selon l'une quelconque des revendications 1 à 3, comprenant en outre : une partie d'inversion de signal (160) qui délivre en sortie un signal de commande inversé qui est inversé à partir du signal de commande délivré en sortie par l'unité de commande, l'unité de commande étant conçue pour délivrer en sortie un signal haut ou un signal bas dans lequel le signal haut a une valeur supérieure à celle du signal bas.

5. Appareil de traitement vidéo selon l'une quelconque des revendications 1 à 4, dans lequel la source de signal vidéo et les connecteurs sont connectés les uns aux autres soit par HDMI soit par DVI.

6. Appareil de traitement vidéo selon l'une quelconque des revendications 1 à 5, dans lequel chaque connecteur comprend une ligne TMDS, une ligne DDC, et une ligne HPD.

7. Appareil de traitement vidéo selon l'une quelconque des revendications 1 à 6, dans lequel chacun de la pluralité de connecteurs comprend une unité de réception de signal de commande, et l'unité de commande comprend une unité de transmission de signal de commande unique pour transmettre le signal de commande à la pluralité de connecteurs.

8. Procédé de commande d'un appareil de traitement vidéo ayant une pluralité de connecteurs (110), comprenant chacun une ligne de Détection de Branchement à Chaud HPD, pour se connecter à une pluralité de sources de signaux vidéo, une partie de décodage (130) qui décode un signal vidéo fourni en provenance de la pluralité de sources de signaux vidéo, et une partie de commutation (120) qui connecte sélectivement l'un quelconque de la pluralité de connecteurs à la partie de décodage, le procédé comprenant les étapes consistant à :
déterminer si l'un de la pluralité de connecteurs (110) connectés à une source de signal vidéo est connecté à la partie de décodage (130) par la partie de commutation (120) ;
recevoir des informations en provenance de la partie de commutation pour déterminer lequel de la pluralité de connecteurs (110) est connecté à la partie de décodage (130) par la partie de commutation (120) ;
délivrer en sortie un signal de commande (S20) audit un de la pluralité de connecteurs (110) pour transmettre le signal vidéo provenant de ladite source de signal vidéo, **caractérisé par** les étapes consistant à :
transmettre le signal de commande par l'intermédiaire de la partie de commutation au connecteur connecté à ladite source de signal vidéo, le signal de commande comprenant un signal de commande de détection de branchement à chaud HPD ; et délivrer en sortie le signal de commande audit un de la pluralité de connecteurs (110) pour transmettre le signal vidéo de ladite source de signal vidéo à la partie de décodage lorsqu'il est déterminé que le connecteur connecté à ladite source de signal vidéo est connecté à la partie de décodage (130) par la partie de commutation (120).

9. Procédé de commande selon la revendication 8, comprenant en outre l'étape consistant à :
informer un utilisateur (S30) du fait que le connecteur connecté à la source de signal vidéo n'est pas connecté à la partie de décodage lorsque le connecteur connecté à la source de signal vidéo n'est pas connecté à la partie de décodage.

10. Procédé de commande selon la revendication 8 ou 9, comprenant en outre l'étape consistant à :
commander la partie de commutation pour connecter l'un quelconque de la pluralité de connecteurs à la partie de décodage conformément à la commande d'un utilisateur.

11. Procédé de commande selon l'une quelconque des revendications 8 à 10, comprenant en outre l'étape consistant à :
délivrer en sortie un signal de commande inversé qui est inversé à partir du signal commande, le signal de commande étant un signal haut ou un signal bas dans lequel le signal haut a une valeur supérieure à celle du signal bas.

12. Procédé de commande selon l'une quelconque des revendications 8 à 11, dans lequel la source de signal vidéo et les connecteurs sont connectés les uns aux autres soit par HDMI soit par DVI.

13. Procédé de commande selon l'une quelconque des revendications 8 à 12, dans lequel l'appareil de commande vidéo comprend une unité de commande pour générer le signal de commande, et chacun de la pluralité de connecteurs comprend une unité de réception de signal de commande, et l'unité de commande comprend une unité de transmission de signal de commande unique pour transmettre le signal de commande à la pluralité de connecteurs.
